# EUROPÄISCHE PATENTSCHRIFT

(11) **EP 2 394 070 B1**
(45) Veröffentlichungstag und Bekanntmachung des Hinweises auf die Patenterteilung: **01.10.2014**
(21) Anmeldenummer: 10701523.2
(22) Anmeldetag: 27.01.2010
(51) Int. Cl.: F16D 41/20

(54) **LASTDREHMOMENTSPERRE SOWIE AGGREGAT MIT LASTDREHMOMENTSPERRE**
LOAD TORQUE LOCK AND APPARATUS HAVING LOAD TORQUE LOCK
SYSTÈME DE BLOCAGE DE COUPLE DE CHARGE ET APPAREIL ÉQUIPÉ D'UN SYSTÈME DE BLOCAGE DE COUPLE DE CHARGE

(30) Priorität: 27.01.2010 DE 102010001245; 03.02.2009 DE 102009000563
(43) Veröffentlichungstag der Anmeldung: 14.12.2011
(73) Patentinhaber: Robert Bosch GmbH, 70442 Stuttgart (DE)
(72) Erfinder: MILI, Tarek, 76133 Karlsruhe (DE); BAUER, Christian, 77886 Lauf (DE); DOMMSCH, Hans-Peter, 77839 Lichtenau (DE); MILI, Mohamed, 76133 Karlsruhe (DE); BOHR, Peter, 76137 Karlsruhe (DE); HOLZER, Thomas, 74889 Sinsheim-Waldangelloch (DE); THOENE, Holger, 76437 Rastatt (DE)
(86) Internationale Anmeldenummer: PCT/EP2010/050885
(87) Internationale Veröffentlichungsnummer: WO 2010/089232

(56) Entgegenhaltungen:
- GB-A- 2 211 565
- JP-A- S5 929 822
- US-A- 5 328 007
- TOOTEN K: "OPTIMIERUNG DER SCHLINGBANDFEDER IN EINER LASTMOMENTSPERRE" ANTRIEBSTECHNIK, VEREINIGTE FACHVERLAGE, MAINZ, DE, Bd. 35, Nr. 1, 1. Januar 1996 (1996-01-01) , Seiten 42-46, XP000548141 ISSN: 0722-8546

## Beschreibung

### Stand der Technik

Die Erfindung betrifft eine Lastdrehmomentsperre, insbesondere für Kraftfahrzeuganwendungen, gemäß dem Oberbegriff des Anspruchs 1, sowie ein Aggregat, insbesondere ein Hilfs- und Komfortaggregat, vorzugsweise für Kraftfahrzeuganwendungen, mit einer Lastdrehmomentsperre gemäß Anspruch 15.

Aus der DE 197 53 106 C2 ist eine Lastdrehmomentsperre bekannt, die in einem Antriebsstrang eingebaut ist und beim Stillstand des Antriebs selbstständig die vom Abtrieb eingeleiteten Drehmomente sperrt. Die von der Antriebsseite eingeleiteten Drehmomente werden in beide Richtungen übertragen. Zum Blockieren des abtriebsseitigen Drehmomentes wirkt eine Schlingfeder reibschlüssig mit einem Bremskörper zusammen. Die bekannte Lastdrehmomentsperre hat sich bewährt. Es bestehen jedoch Bestrebungen, die Lastdrehmomentsperre robuster zu gestalten, da es insbesondere im Kontaktbereich der Schlingfeder zu dem Kunststoffmitnehmer zu Deformationen des Kunststoffs kommen kann, die auf unzulässige, im Betrieb auftretende Flächenpressungen sowie relativ hohe Biegespannungen zurückzuführen sind.

Weitere Lastmomentdrehsperren sind ebenso aus der JP-59-029822 oder GB2 211 565 bekannt.

### Offenbarung der Erfindung

Der Erfindung liegt daher die Aufgabe zugrunde, eine robuste Lastdrehmomentsperre anzugeben, die eine erhöhte Lebensdauer aufweist. Bevorzugt soll die Lastdrehmomentsperre kostengünstig herstellbar sein und weiter bevorzugt in Leichtbauweise realisiert werden können. Ferner besteht die Aufgabe darin, ein Aggregat mit einer entsprechend optimierten Lastdrehmomentsperre anzugeben.

Diese Aufgabe wird hinsichtlich der Lastdrehmomentsperre mit den Merkmalen des Anspruchs 1 sowie hinsichtlich des Aggregates mit den Merkmalen des Anspruchs 15 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, den mindestens einen Kontaktbereich des Mitnehmers, an dem das Schlingelement im Blockierfall anliegt bzw. sich abstützt, mit Mitteln auszustatten, die eine Reduzierung der Biegespannung in dem wenigstens einen Kontaktbereich bewirken.

Besonders bevorzugt ist eine Ausführungsform, bei der zwei Kontaktbereiche des Mitnehmers, die jeweils mit einem freien Ende des Schlingelementes zusammenwirken, zumindest zum Teil aus Metall ausgebildet sind. Durch eine zumindest teilweise Ausbildung des mindestens einen Kontaktbereichs des Mitnehmers aus Metall können unzulässige Flächenpressungen sowie eine hohe Biegebeanspruchung vermieden werden, wodurch eine Beschädigung des Mitnehmers bei der Einleitung eines zu blockierenden Drehmomentes sicher verhindert werden kann.

Eine nach dem Konzept der Erfindung ausgebildete Lastdrehmomentsperre eignet sich insbesondere für Kraftfahrzeuganwendungen, wie Schiebedachantriebe, Sitzversteller, Fensterheber, Scheibenwischerantriebe, Getriebe- und Kupplungssteller sowie für elektrische Lenkungen und für den Einsatz in Stellantrieben im Allgemeinen. Die Anwendung einer nach dem Konzept der Erfindung ausgebildeten Lastdrehmomentsperre ist hierauf jedoch nicht beschränkt und kann grundsätzlich bei sämtlichen Motoren bzw. Antrieben und Maschinen eingesetzt werden.

Ganz besonders bevorzugt ist eine Ausführungsform der Lastdrehmomentsperre, bei der der mit dem Antriebsrad, vorzugsweise durch axiales Eingreifen, gekoppelte Mitnehmer mehrteilig ausgeführt ist, vorzugsweise derart, dass er einen Kunststoff-Grundkörper umfasst, an dem mindestens ein Metallelement zur Bildung mindestens eines Kontaktbereichs festgelegt ist. Ganz besonders bevorzugt handelt es sich bei dem Mitnehmer bzw. bei dem Grundkörper um ein Kunststoff-Spritzgussteil. Durch die Mehrteiligkeit des Mitnehmers (Kunststoffund Metallschutz) wird es möglich, den Kontaktdruck zum Schlingelement so zu verteilen, dass der Grundkörper aus Kunststoff den Belastungen standhält und insgesamt ein kostengünstig herstellbares System erhalten wird.

Im Hinblick auf die Art und Weise der Festlegung des mindestens einen Metallelementes am Kunststoffabschnitt des Mitnehmers, vorzugsweise an einem Grundkörper des Mitnehmers, gibt es die unterschiedlichsten Möglichkeiten. So ist es beispielsweise möglich, das Metallelement im Spritzgussverfahren teilweise zu umspritzen und auf diese Weise festzulegen. Bei einer alternativen Ausführungsform ist das Metallelement mit dem Kunststoffabschnitt verrastbar bzw. auf diesen aufklipsbar und kann im Nachhinein an diesem auf einfache Weise befestigt werden.

Auch im Hinblick auf die Ausbildung des Metallelementes gibt es unterschiedliche Möglichkeiten. So ist es beispielsweise möglich, das Metallelement als Hülse oder als einseitig, insbesondere bodenseitig, geschlossenen Topf auszubilden und derart anzuordnen, dass das Metallelement den Kunststoffabschnitt zumindest teilweise abdeckt bzw. umschließt. Auch ist es möglich das Metallelement derart auszubilden, das es von dem Kunststoff des Mitnehmers zumindest teilweise umspritzt ist.

Darüber hinaus gibt es auch im Hinblick auf die konkrete Ausbildung des Schlingelementes unterschiedliche Möglichkeiten. Besonders bevorzugt ist eine Ausführungsform, bei der das Schlingelement als, insbesondere metallische, Schlingfeder ausgebildet ist, wobei die Schlingfeder bevorzugt mit zwei in axialer Richtung voneinander beabstandeten, vorzugsweise nach radial innen gebogenen, freien Enden mit jeweils einem metallischen Kontaktbereich des Mitnehmers zusammenwirkt. Es sind auch alternative Ausführungsformen des Schlingelementes, beispielsweise als Schlinggliederkette, Schlingband, Schlingseil, od.dgl. möglich. Bevorzugt ist das Schlingelement derart angeordnet, dass dessen freie Enden in Umfangsrichtung gegeneinander sowie voneinander weg bewegbar sind, um das Schlingelement für den Sperrfall reibschlüssig radial innen oder radial außen in Reibschluss mit dem Bremskörper zu bringen.

Auch im Hinblick auf die Ausbildung des Bremskörpers gibt es unterschiedliche Möglichkeiten. Besonders bevorzugt ist es, wenn der Bremskörper eine zylindrische Reibfläche (Innen- oder Außenmantelfläche) aufweist, wobei sowohl eine Ausführungsform realisierbar ist, bei der das Schlingelement mit dem Innenumfang des Bremskörpers, also mit einer am Innenumfang ausgebildeten Reibfläche, zusammenwirkt oder den Bremskörper umgibt und in diesem Fall reibschlüssig mit einem Außenumfang des Bremskörpers im Blockierfall reibschlüssig zusammenwirkt.

Die Erfindung führt auch auf ein Aggregat, vorzugsweise ein Hilfs- oder Komfortaggregat, insbesondere für Kraftfahrzeuganwendungen. Bei dem Aggregat kann es sich beispielsweise um einen Motor und/oder eine Maschine handeln. Ganz besonders bevorzugt handelt es sich um einen Verstellantrieb, wie einen Schiebedachantrieb, einen Fensterheberantrieb, einen Sitzverstellantrieb, einen Scheibenwischerantrieb oder einen Getriebe- und/oder Kupplungssteller. Es kann sich auch um eine elektrische Fahrzeuglenkung, etc. handeln. Das Aggregat zeichnet sich dadurch aus, dass dieses mit mindestens einer nach dem Konzept der Erfindung ausgebildeten Lastdrehmomentsperre versehen ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: in einer perspektivischen, teilgeschnittenen Darstellung eine mögliche Ausführungsform einer Lastdrehmomentsperre (Sperrkupplung),
- Fig. 2: eine Explosionsdarstellung eines Mitnehmers, bestehend aus einem Kunststoff-Grundkörper und zwei aufklipsbaren Metallelementen,
- Fig. 3: eine Seitenansicht eines fertig montierten Mitnehmers,
- Fig. 4: eine in Bezug auf Fig. 3 um 180° gedrehte Seitenansicht des montierten Mitnehmers,
- Fig. 5: einen Teil der Lastdrehmomentsperre in einer teilweisen geschnittenen perspektivischen Ansicht mit einem modifizierten Metallelement,
- Fig. 6: das Metallelement gemäß der Fig. 5 in einer perspektivischen Ansicht,
- Fig. 7: einen modifizierten Mitnehmer in einer perspektivischen Ansicht,
- Fig. 8: den Mitnehmer gemäß der Fig. 7 mit einem zusätzlichen Metallelement, ebenfalls in einer perspektivischen Ansicht,
- Fig. 9: ein weiteres modifiziertes Metallelement mit einem Stützabschnitt in perspektivischer Darstellung,
- Fig. 10: das Metallelement gemäß der Fig. 10 bei auf dem Mitnehmer montiertem Zustand in perspektivischer Ansicht,
- Fig. 11: ein weiteres modifiziertes Metallelement mit einem Stützabschnitt in perspektivischer Darstellung,
- Fig. 12: das Metallelement gemäß der Fig. 11 bei auf dem Mitnehmer montiertem Zustand in perspektivischer Ansicht,
- Fig. 13: ein weiteres modifiziertes Metallelement mit einem Stützabschnitt in perspektivischer Darstellung und
- Fig. 14: das Metallelement gemäß der Fig. 13 bei auf dem Mitnehmer montiertem Zustand in perspektivischer Ansicht.

In den Figuren sind gleiche Elemente und Elemente mit der gleichen Funktion mit den gleichen Bezugszeichen gekennzeichnet.

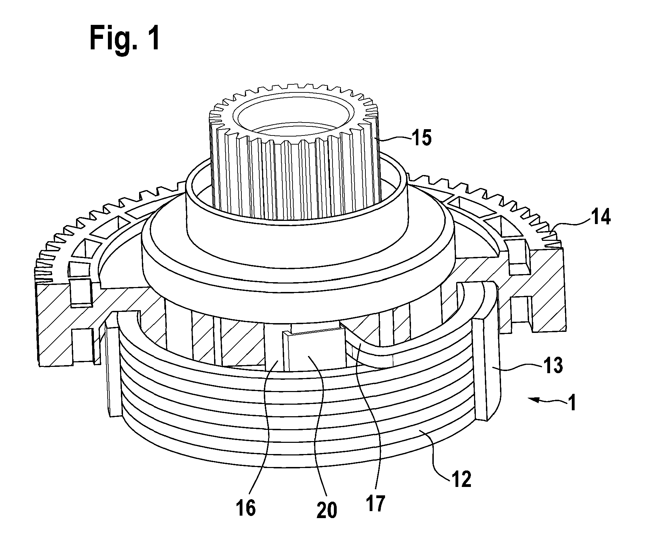

In Fig. 1 ist eine mögliche Ausführungsform einer dauergekuppelten, d.h. nicht entkuppelbaren, Lastdrehmomentsperre 1 gezeigt. Diese umfasst ein als metallische Schlingfeder ausgebildetes Schlingelement 12. Das Schlingelement 12 ist in einem hohlzylindrischen Bremskörper 13 aufgenommen und wirkt im Blockierfall mit seinem Außenumfang mit der inneren Umfangsfläche des Bremskörpers 13 zusammen. Bei einer alternativen, an sich bekannten, nicht dargestellten Ausführungsvariante wirkt das Schlingelement 12 mit seinem Innenumfang mit dem, vorzugsweise zylindrischen, Außenumfang eines Bremskörpers zusammen.

Die Lastdrehmomentsperre 1 umfasst ein als Schneckenrad ausgebildetes Antriebsrad 14, das von einer nicht dargestellten, elektromotorisch angetriebenen Getriebeschnecke in beide Umfangsrichtungen antreibbar ist. Das Antriebsrad 14 ist gekoppelt mit einem Mitnehmer 15, der in axialer Richtung in Aufnahmetaschen 16 des Antriebsrades 14 eingreift. Der Mitnehmer 15 dient wiederum zur Übertragung des antriebsseitig eingeleiteten Drehmoments an einen Verstellmechanismus, beispielsweise einen Seilzugmechanismus eines Fensterheberantriebs.

Das Schlingelement 12 weist zwei in axialer Richtung voneinander beabstandete freie Enden auf, von denen in Fig. 1 nur ein oberes, nach radial innen gebogenes freies Ende 17 gezeigt ist. Das Antriebsrad 14 wirkt derart mit dem Mitnehmer 15 zusammen, dass, wenn antriebsseitig, d.h. von dem Antriebsrad 14, ein Drehmoment eingeleitet wird, dieses auf den Mitnehmer 15 übertragen wird. Das Schlingelement 12 treibt dann durch, d.h. es wird zusammen mit dem Antriebsrad 14 und dem Mitnehmer 15 relativ zu dem feststehenden Bremskörper 13 verstellt. Für den Fall der abtriebsseitigen Drehmomenteinleitung, also der Drehmomenteinleitung über den Mitnehmer 15, werden die freien Enden 17 des Schlingelementes 12 auseinander bewegt, derart, dass sich der Außenumfang des Schlingelementes 12 vergrößert, wodurch das Schlingelement 12 reibschlüssig mit seinem Außenumfang mit dem Innenumfang des Bremskörpers 13 zusammenwirkt und somit das abtriebsseitige Drehmoment sperrt, also nicht weiter auf das Antriebsrad 14 und damit in Richtung Antriebsmotor, insbesondere einen Elektromotor (nicht dargestellt), übertragen wird.

Bei einer nicht dargestellten Ausführungsvariante einer Lastdrehmomentsperre 1, bei der das Schlingelement 12 mit dem Außenumfang eines Bremskörpers 13 zusammenwirkt, müssen die freien Enden 17, wie zuvor beschrieben, jedoch mit umgekehrten Vorzeichen zueinander verstellt werden, um den Bremseffekt zu bewirken.

Um die Robustheit der Lastdrehmomentsperre 1 zu erhöhen, ist an jedem axialen Fortsatz 18 (nur einer dargestellt), mittels denen der Mitnehmer 15 axial in die Aufnahmetaschen 16 eingreift, ein Metallelement 20 vorgesehen, an dem sich jeweils ein freies Ende 17 des Schlingelementes 12 zum Blockieren des abtriebsseitigen Drehmomentes abstützt.

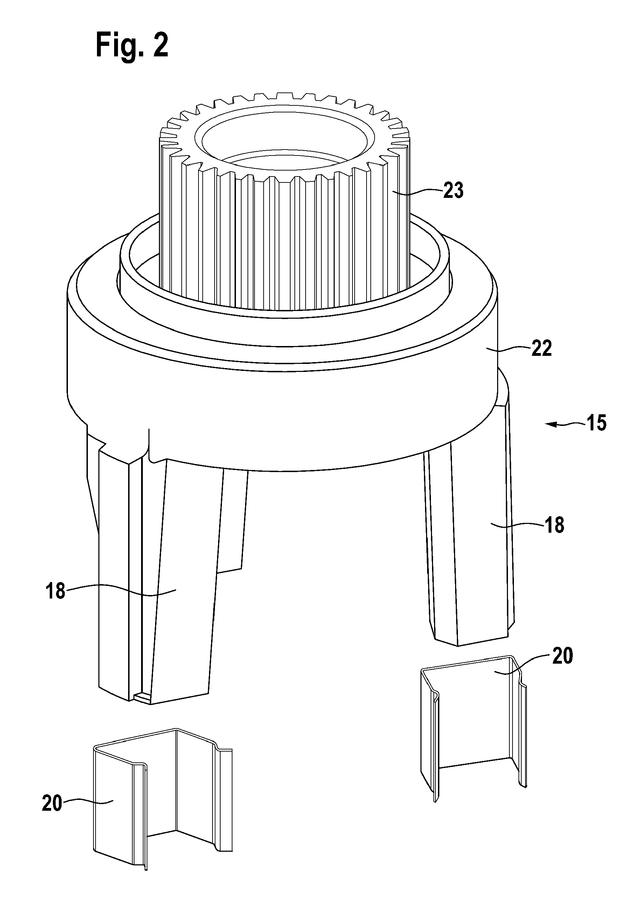

Im Folgenden wird eine erste bevorzugte Ausführungsform des mehrteilig ausgebildeten Mitnehmers 15 anhand der perspektivischen Darstellungen gemäß den Fig. 2 bis Fig. 4 im Detail erläutert.

Fig. 2 zeigt in einer perspektivischen Darstellung den mehrteilig aufgebauten Mitnehmer 15. Dieser umfasst einen als Spritzgussteil hergestellten Grundkörper 22 aus Kunststoff. In einem oberen Abschnitt ist der Grundkörper 22 mit einer Außenverzahnung 23 versehen, um das auf den Mitnehmer 15 von dem Antriebsrad 14 (vgl. Fig. 1) übertragene Drehmoment weiter, beispielsweise an einen Seilzugmechanismus, übertragen zu können.

Der Mitnehmer 15, genauer der Grundkörper 22, weist zwei in Umfangsrichtung um 180° voneinander beabstandete axiale, zapfenartige Fortsätze 18 auf, die zur Drehmomentübertragung dienen, einerseits zum Einleiten eines abtriebsseitigen Drehmomentes in das Schlingelement 12 gemäß Fig. 1 und andererseits zur Aufnahme eines antriebsseitig über das Antriebsrad 14 (vgl. Fig. 1) eingeleiteten Drehmomentes.

Ferner umfasst der Mitnehmer 15 zwei aufklipsbare Metallelemente 20 zum Festlegen an den Fortsätzen 18, mit dem Ziel, die Robustheit des mehrteiligen Mitnehmers 15 zu erhöhen. Im Gegensatz zum Stand der Technik stützen sich die freien Enden 17 des Schlingelementes 12 nicht unmittelbar an den Fortsätzen 18, sondern nur mittelbar an diesen über die Metallelemente 9 ab, die unmittelbar, d.h. direkt, mit den freien Enden 17 des Schlingelementes 12 zusammenwirken.

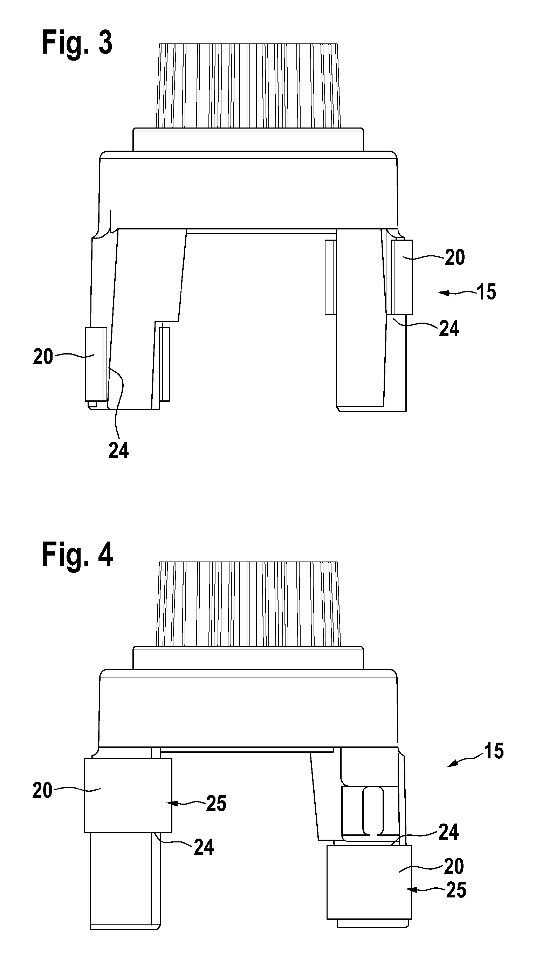

In den Fig. 3 und Fig. 4 ist jeweils der Mitnehmer 15 im fertig montierten Zustand dargestellt. Zu erkennen ist, dass die Metallelemente 20 in axialer Richtung versetzt angeordnet sind. Dies ist darauf zurückzuführen, dass auch die freien Enden 17 des als Schlingfeder ausgebildeten Schlingelementes 12 in axialer Richtung voneinander beabstandet sind.

Die Metallelemente 20 umschließen jeweils einen von jeweils einem Fortsatzabschnitt gebildeten Kunststoffabschnitt 13 des Grundkörpers 22.

Wie sich aus Fig. 4 ergibt, bilden die Metallelemente 20 auf einer gemeinsamen Seite jeweils einen Kontaktbereich 25 zur unmittelbaren Anlage jeweils eines freien Endes 17 des Schlingelementes 12. Auf diese Weise können unzulässige Flächenpressungen, wie sie im Blockierfall bei reinen Kunststoff-Fortsätzen 18 auftreten könnten, sicher vermieden werden. Weiterhin werden durch die Metallelemente 20 die Biegespannungen in den Fortsätzen 18 reduziert, das die von den freien Enden 17 herrührenden Kräfte über einen größeren Bereich in die Fortsätze 18 eingeleitet werden.

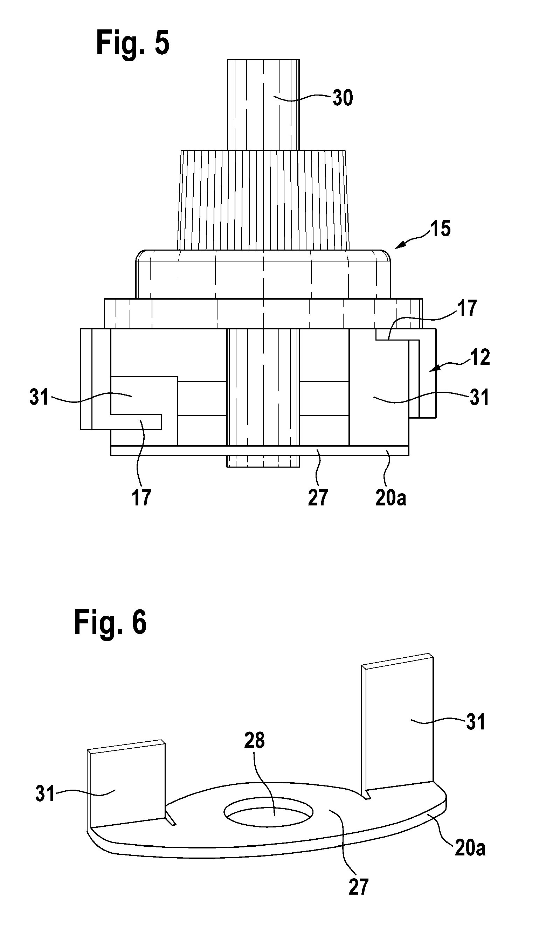

In den Figuren 5 und 6 ist ein modifiziertes Metallelement 20a dargestellt. Das Metallelement 20a weist einen plattenartigen Mittelbereich 27 mit einer Durchgangsöffnung 28 auf. Mittels der Durchgangsöffnung 28 ist das Metallelement 20a in einem Antriebszapfen 30 des Mitnehmers 15 gelagert. Der Mittelbereich 27 ist in einer Ebene unterhalb des Mitnehmers 15 bzw. dessen Fortsätzen 18 angeordnet. Vom Mittelbereich 27 ragen in seinem äußeren Bereich zwei, um 180° zueinander versetzt angeordnete Kontaktabschnitte 31 in Richtung der Fortsätze 18 ab, wobei die beiden Kontaktabschnitte 31 entsprechend der unterschiedlichen axialen Anordnung der beiden freien Enden 17 des Schlingelements 12 unterschiedlich lang ausgebildet sind. Die Kontaktabschnitte 31 sind hierbei zwischen den freien Enden 17 und den Fortsätzen 18 in den Aufnahmetaschen 16 des Mitnehmers angeordnet.

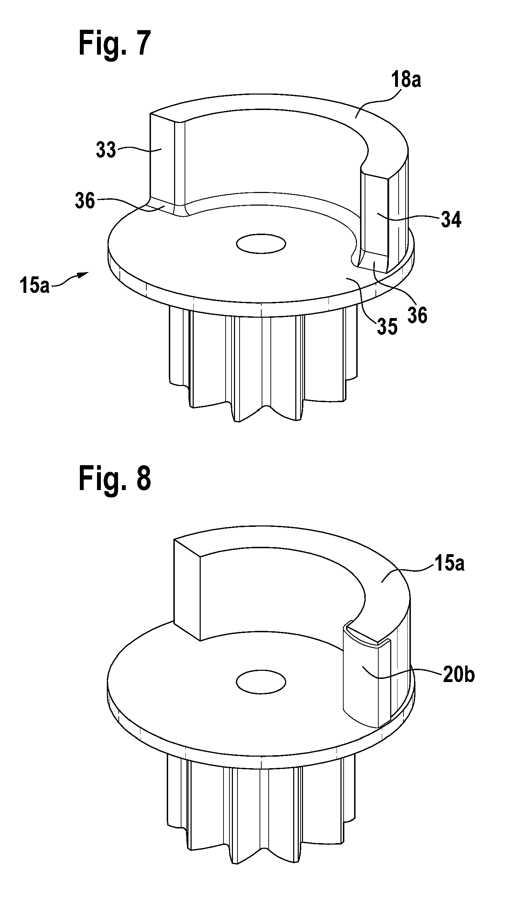

In der Figur 7 ist ein modifizierter Mitnehmer 15a dargestellt. Der Mitnehmer 15a weist Mittel zur Reduktion der Biegespannungen aufgrund der Krafteinleitung der freien Enden 17 des Schlingelements 12 in den Mitnehmer 15a auf. Diese Mittel bestehen in einer besonderen geometrischen Ausbildung des Mitnehmers 15a.

Hierzu weist der Mitnehmer 15a einen modifizierten Fortsatz 18a auf, der in einer Ebene quer zur Längsrichtung des Mitnehmers 15a betrachtet, einen Winkelbereich von wenigstens etwa 10°, insbesondere zwischen 30° und 120°, bis hin zu den dargestellten etwa 180° einnimmt. Dabei ergibt sich der angesprochene Winkelbereich je nach Beanspruchung bzw. zu übertragenden Kräften sowie in u.a. in Abhängigkeit von dem verwendeten Material. Wesentlich bei dem Mitnehmer 15a ist, dass die beiden den Fortsatz 18a begrenzenden Stirnflächen 33, 34 als Gegen- bzw. Anlagefläche für die beiden freien Enden 17 des Schlingelements 12 dienen. Durch die gegenüber den Fortsätzen 18 üblicherweise breitete Ausbildung des Fortsatzes 18a wird insbesondere die Biegebeanspruchung des Fortsatzes 18a am Grund 35 des Mitnehmers 15a reduziert. Weiterhin kann hierzu bevorzugt vorgesehen sein, dass zumindest im Übergangsbereich des Grundes 35 zu den Stirnflächen 33, 34 jeweils ein Radius 36 ausgebildet ist, der die Biegebeanspruchung bzw. die Kerbwirkung weiter reduziert.

In der Fig. 8 ist der Mitnehmer 15a dargestellt, wie er zusätzlich mit einem Metallelement 20b zusammenwirkt, das im Wesentlichen dem in den Fig. 2 bis 4 dargestellten Metallelement 20 entspricht.

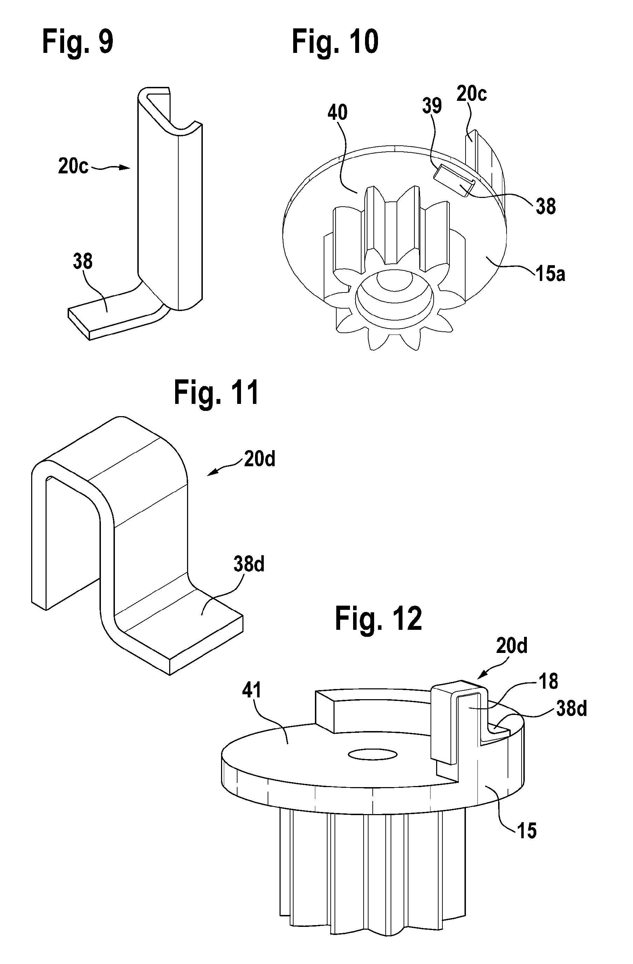

In den Fig. 9 und 10 ist ein modifiziertes Metallelement 20c zur Verwendung an dem Mitnehmer 15a (alternativ hierzu ist auch ein Einsatz an dem Mitnehmer 15 möglich) dargestellt. Hierbei weist das Metallelement 20c einen zusätzlichen Stützabschnitt 38 auf, der einen in dem Mitnehmer 15a ausgebildeten Durchbruch 39 durchgreift und sich an der Unterseite 40 des Mitnehmers 15a anliegt. Hierdurch wird ein von dem freien Ende 17 des Schlingelements 12 übertragenes Biegemoment über den Stützabschnitt 38 auf den Mitnehmer 15a übertragen, wodurch eine zumindest teilweise Entlastung des Fortsatzes 18a bewirkt wird.

In den Fig. 11 und 12 ist ein modifiziertes Metallelement 20d zur Verwendung am Mitnehmer 15 dargestellt. Hierbei ist das Metallelement 20d bügelartig ausgebildet und umfasst den Fortsatz 18 des Mitnehmers 15. Weiterhin weist das Metallelement 20d auf der dem Kontaktbereich 25 gegenüberliegenden Seite einen Stützabschnitt 38d auf, der an der Oberseite 41 des Mitnehmers 15 aufliegt.

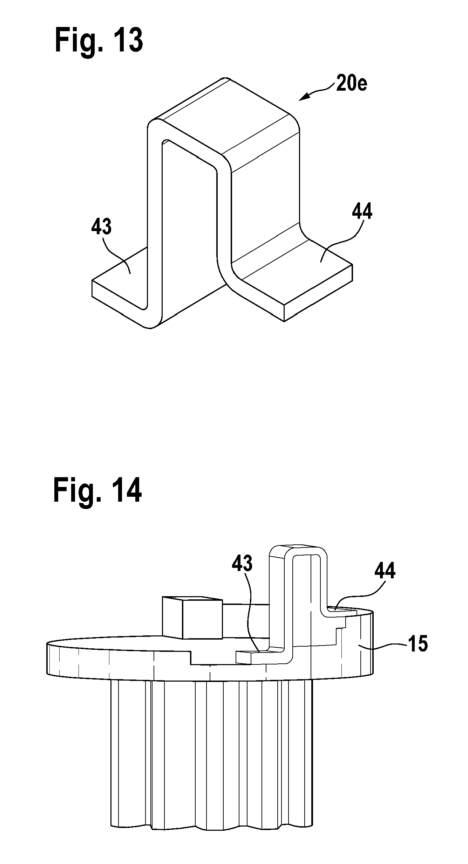

Das in den Fig. 13 und 14 dargestellte modifizierte Metallelement 20e für den Mitnehmer 15 stellt eine Kombination der Metallelemente 20c und 20d dar. Hierzu weist das Metallelement 20e zwei, auf gegenüberliegenden Seiten angeordnete Stützbereiche 43, 44 auf, die mit der Ober- bzw. Unterseite des Mitnehmers 15 zusammenwirken.

Ergänzend wird erwähnt, dass die Metallelemente 20, 20a bis 20e insbesondere als Stanzbiegeteil aus Blech hergestellt sind. Weiterhin kann es bei den Metallelementen 20c, 20d, 20e vorgesehen sein, dass die Stützabschnitte 38, 38d, 43, 44 auch vom Kunststoff des Mitnehmers 15, 15a umschlossen sind. Dadurch werden die Metallelemente 20c, 20d, 20e zusätzlich in dem Mitnehmer 15, 15a verankert, so dass auf zusätzliche Haltemaßnahmen am Mitnehmer 15, 15a ggf. verzichtet werden kann.

## Patentansprüche

1. Lastdrehmomentsperre (1), umfassend ein zum Sperren eines Drehmomentes mit einem Bremskörper (13) reibschlüssig zusammenwirkendes Schlingelement (12), sowie ein Antriebsrad (14), welches drehmomentübertragend mit einem axial in das Antriebsrad (14) eingreifenden, mindestens einen Kontaktbereich (25) zum Schlingelement (12) aufweisenden Mitnehmer (15; 15a) gekoppelt ist, mit dem ein zu blockierendes Drehmoment in das Schlingelement (12) einleitbar ist, und das Schlingelement (12) als Schlingfeder ausgebildet ist, wobei die Schlingfeder mit zwei in axialer Richtung voneinander beabstandeten, nach radial innen gebogenen, freien Enden (17) mit jeweils einem Kontaktbereich (25) des Mitnehmers (15, 15a) zusammenwirkt, wobei die freien Enden (17) in Umfangsrichtung gegeneinander, sowie voneinander weg bewegbar sind, um das Schlingelement (12) für den Sperrfall reibschlüssig radial innen oder radial außen in Reibschluss mit dem Bremskörper (13) zu bringen,
**dadurch gekennzeichnet, dass**
der Mitnehmer (15;15a) Mittel zur Reduzierung der Biegespannung in dem wenigsten einen Kontaktbereich (25) aufweist, wobei ein Grundkörper des Mitnehmers (15;15a) aus Kunststoff und der Kontaktbereich des Mitnehmers (15;15a) aus Metal ausgebildet ist.

2. Lastdrehmomentsperre nach Anspruch 1,
**dadurch gekennzeichnet,**
**dass** der Kontaktbereich (25) von einem an einem Kunststoffabschnitt (24) des Mitnehmers (15; 15a) angeordneten Metallelement (20, 20a bis 20e) gebildet ist.

3. Lastdrehmomentsperre nach einem der Ansprüche 2 oder 3,
**dadurch gekennzeichnet,**
**dass** der Mitnehmer (15; 15a) bis auf das mindestens eine, mindestens einen Kontaktbereich (25) bildende Metallelemente (20, 20a bis 20e) vollständig aus Kunststoff, insbesondere als Kunststoffspritzgussteil, ausgebildet ist.

4. Lastdrehmomentsperre nach Anspruch 3,
**dadurch gekennzeichnet,**
**dass** das Metallelement (20, 20a bis 20e) auf den Kunststoffabschnitt (24) aufgeklipst ist.

5. Lastdrehmomentsperre nach einem der Ansprüche 2 bis 4,
**dadurch gekennzeichnet,**
**dass** das Metallelement (20, 20a bis 20e) als den Kunststoffabschnitt (24) zumindest teilweise umschließende Hülse oder Topf ausgebildet ist.

6. Lastdrehmomentsperre nach Anspruch 5,
**dadurch gekennzeichnet,**
**dass** das Metallelement (20c; 20d; 20e) wenigstens einen, insbesondere senkrecht zum Kontaktbereich (25) angeordneten Stützabschnitt (38; 38d; 43, 44) aufweist, der in dem Mitnehmer (15; 15a) eingebettet ist oder sich an einer Oberfläche des Mitnehmers (15; 15a) abstützt.

7. Lastdrehmomentsperre nach Anspruch 2 oder 3,
**dadurch gekennzeichnet,**
**dass** das Metallelemente (20a) auf einem Lagerzapfen (30) für den Mitnehmer (15) drehbar gelagert ist und, dass das Metallelement (20a) wenigstens einen achsparallel zum Lagerzapfen (30) angeordneten Kontaktabschnitt (31) aufweist, der mit dem wenigstens einen Kontaktbereich (25) des Mitnehmers (15) zusammenwirkt.

8. Lastdrehmomentsperre nach Anspruch 7,
**dadurch gekennzeichnet,**
**dass** das Metallelement (20a) einen Mittelbereich (27) aufweist, an dessen äußerem Bereich jeweils ein Kontaktabschnitt (31) angeordnet ist.

9. Lastdrehmomentsperre nach Anspruch 8,
**dadurch gekennzeichnet,**
**dass** der Mittelbereich (27) in einer Ebene unterhalb des Mitnehmers (15) angeordnet ist.

10. Lastdrehmomentsperre nach einem der Ansprüche 2 bis 9,
**dadurch gekennzeichnet,**
**dass** das Metallelement (20, 20a bis 20e) als Stanzbiegeteil ausgebildet ist.

11. Lastdrehmomentsperre nach Anspruch 1,
**dadurch gekennzeichnet,**
**dass** die als Kontaktflächen wirkenden Stirnflächen (33, 34) an einem Fortsatz (18a) eines einzigen Mitnehmers (15a) angeordnet ist und, dass im Übergangsbereich von den Stirnflächen (33, 34) zu einem Grund (35) des Mitnehmers (15a) zumindest an der Seite der Stimflächen (33, 34) ein Radius (36) ausgebildet ist.

12. Lastdrehmomentsperre nach Anspruch 11,
**dadurch gekennzeichnet,**
**dass** der Fortsatz (18a) quer zur Längsachse des Mitnehmers (15a) betrachtet einen Winkelbereich von wenigstens 10" überdeckt.

13. Lastdrehmomentsperre nach einem der vorhergehenden Ansprüche,
**dadurch gekennzeichnet,**
**dass** das Schlingelement (12) als Schlingfeder, Schlinggliederkette, Schlingband, oder Schlingseil ausgebildet ist.

14. Aggregat, insbesondere für Kraftfahrzeuganwendungen, insbesondere Motor, Maschine, Verstellantrieb, Schiebedachantrieb, Fensterheberantrieb, Scheibenwischerantrieb, Getriebe- und/oder Kupplungssteller, elektrische Kraftfahrzeuglenkung, mit einer Lastdrehmomentsperre (1) nach einem der vorhergehenden Ansprüche.

## Claims

1. Load torque lock (1), comprising a sling element (12) which interacts frictionally with a brake component (13) for blocking a torque, and a drive wheel (14) which is coupled in a torque transmitting manner to a carrier (15; 15a) which engages axially in the drive wheel (14) and has at least one contact region (25) to the sling element (12), by means of which carrier (15; 15a) a torque to be blocked can be induced in the sling element (12),
and the, sling element (12) is in the form of a sling spring, the sling spring interacting, by means of two inwardly bent, axially spaced free ends (17), with respective contact regions (25) of the carrier (15, 15a), it being possible for the free ends (17) to be moved towards and away from one another in the circumferential direction in order to bring the sling element (12) frictionally into frictional engagement with the brake component (13) on the radially inner side or the radially outer side in the event of blocking,
**characterized in that**
the carrier (15; 15a) has means for reducing the bending stress in the at least one contact region (25), a main body of the carrier (15; 15a) being made of plastic and the contact region of the carrier (15; 15a) being made of metal.

2. Load torque lock according to Claim 1,
**characterized in that**
the contact region (25) is formed by a metal element (20, 20a to 20e) arranged on a plastics portion (24) of the carrier (15; 15a).

3. Load torque lock according to either of Claims 2 and 3,
**characterized in that**
the carrier (15; 15a) is formed entirely from plastics material, in particular as a plastics injection molding, apart from the at least one metal element (20, 20a to 20e) forming the at least one contact region (25).

4. Load torque lock according to Claim 3,
**characterized in that**
the metal element (20, 20a to 20e) is clipped to the plastics portion (24).

5. Load torque lock according to any one of Claims 2 to 4,
**characterized in that**
the metal element (20, 20a to 20e) is configured as a shell or pot at least partially enclosing the plastics portion (24).

6. Load torque lock according to Claim 5,
**characterized in that**
the metal element (20c; 20d; 20e) has at least one support section (38; 38d; 43, 44) arranged, in particular, perpendicularly to the contact region (25), which support section (38; 38d; 43, 44) is embedded in the carrier (15; 15a) or bears against a surface of the carrier (15; 15a).

7. Load torque lock according to Claim 2 or 3,
**characterized in that**
the metal element (20a) is mounted rotatably on a bearing pin (30) for the carrier (15), and **in that** the metal element (20a) has at least one contact section (31) arranged parallel to the axis of the bearing pin (30), which contact section (31) interacts with the at least one contact region (25) of the carrier (15).

8. Load torque lock according to Claim 7,
**characterized in that**
the metal element (20a) has a middle region (27) on each of the outer portions of which a respective contact section (31) is arranged.

9. Load torque lock according to Claim 8,
**characterized in that**
the middle region (27) is arranged in a plane below the carrier (15).

10. Load torque lock according to any one of Claims 2 to 9,
**characterized in that**
the metal element (20; 20a to 20e) is in the form of a punched and bent part.

11. Load torque lock according to Claim 1,
**characterized in that**
the end faces (33, 34) acting as contact faces are arranged on a projection (18a) of a single carrier (15a), and **in that** a radius (36) is formed in the transitional region between the end faces (33, 34) and a base (35) of the carrier (15a), at least on the side of the end faces (33, 34).

12. Load torque lock according to Claim 11,
**characterized in that**
the projection (18a) occupies an angular range of at least 10°, viewed transversely to the longitudinal axis of the carrier (15a).

13. Load torque lock according to any one of the preceding claims,
**characterized in that**
the sling element (12) is in the form of a sling spring, a sling link chain, a sling strap, or a sling cable.

14. Apparatus, in particular for automotive applications, in particular motor, machine, adjustment drive, sliding roof drive, window regulator drive, windshield wiper drive, transmission and/or clutch actuator, electric steering system for motor vehicles, having a load torque lock (1) according to any one of the preceding claims.

## Revendications

1. Système de blocage de couple de charge (1), comportant un élément enroulé (12) coopérant par engagement par friction avec un corps de frein (13) pour le blocage d'un couple, ainsi qu'une roue d'entraînement (14), laquelle est accouplée, de manière à transmettre un couple, à un dispositif d'entraînement (15 ; 15a) venant en prise axialement dans la roue d'entraînement (14) et comprenant au moins une région de contact (25) avec l'élément enroulé (12), à l'aide duquel dispositif d'entraînement un couple à bloquer peut être appliqué à l'élément enroulé (12), et l'élément enroulé (12) est réalisé sous forme de ressort enroulé, le ressort enroulé coopérant, par deux extrémités libres (17) espacées l'une de l'autre dans la direction axiale et courbées radialement vers l'intérieur, avec une région de contact (25) respective du dispositif d'entraînement (15, 15a), les extrémités libres (17) pouvant être déplacées dans la direction périphérique l'une vers l'autre ainsi qu'à l'écart l'une de l'autre, afin d'amener, par engagement par friction, l'élément enroulé (12), en cas de blocage, radialement vers l'intérieur ou radialement vers l'extérieur en engagement par friction avec le corps de frein (13),
**caractérisé en ce que**
le dispositif d'entraînement (15 ; 15a) comprend des moyens de réduction de la contrainte de flexion dans l'au moins une région de contact (25), un corps de base du dispositif d'entraînement (15 ; 15a) étant réalisé en plastique et la région de contact du dispositif d'entraînement (15 ; 15a) étant réalisée en métal.

2. Système de blocage de couple de charge selon la revendication 1,
**caractérisé en ce que**
la région de contact (25) est formée par un élément métallique (20, 20a à 20e) disposé sur une section en plastique (24) du dispositif d'entraînement (15 ; 15a).

3. Système de blocage de couple de charge selon la revendication 2 ou 3,
**caractérisé en ce que**
le dispositif d'entraînement (15 ; 15a) est réalisé entièrement en plastique, en particulier sous forme de pièce moulée par injection de plastique, à l'exception de l'au moins un élément métallique (20, 20a à 20e) formant au moins une région de contact (25).

4. Système de blocage de couple de charge selon la revendication 3,
**caractérisé en ce que**
l'élément métallique (20, 20a à 20e) est enclipsé sur la section en plastique (24).

5. Système de blocage de couple de charge selon l'une quelconque des revendications 2 à 4,
**caractérisé en ce que**
l'élément métallique (20, 20a à 20e) est réalisé sous forme de douille ou de pot entourant au moins partiellement la section en plastique (24).

6. Système de blocage de couple de charge selon la revendication 5,
**caractérisé en ce que**
l'élément métallique (20c ; 20d ; 20e) comprend au moins une portion d'appui (38 ; 38d ; 43,44) disposée en particulier perpendiculairement à la région de contact (25), laquelle portion d'appui est encastrée dans le dispositif d'entraînement (15 ; 15a) ou s'appuie contre une surface du dispositif d'entraînement (15 ; 15a).

7. Système de blocage de couple de charge selon la revendication 2 ou 3,
**caractérisé en ce que**
l'élément métallique (20a) est monté à rotation sur un tourillon de palier (30) pour le dispositif d'entraînement (15), et **en ce que** l'élément métallique (20a) comprend au moins une section de contact (31) disposée parallèlement à l'axe du tourillon de palier (30), laquelle section de contact coopère avec l'au moins une région de contact (25) du dispositif d'entraînement (15).

8. Système de blocage de couple de charge selon la revendication 7,
**caractérisé en ce que**
l'élément métallique (20a) comprend une région centrale (27) sur les régions extérieures de laquelle est respectivement disposée une section de contact (31).

9. Système de blocage de couple de charge selon la revendication 8,
**caractérisé en ce que**
la région centrale (27) est disposée dans un plan en dessous du dispositif d'entraînement (15).

10. Système de blocage de couple de charge selon l'une quelconque des revendications 2 à 9,
**caractérisé en ce que**
l'élément métallique (20, 20a à 20e) est réalisé sous forme de pièce estampée cintrée.

11. Système de blocage de couple de charge selon la revendication 1,
**caractérisé en ce que**
les surfaces frontales (33, 34) agissant en tant que surfaces de contact sont disposées sur un prolongement (18a) d'un dispositif d'entraînement unique (15a), et **en ce qu'**un rayon (36) est réalisé dans la région de transition des surfaces frontales (33, 34) à une base (35) du dispositif d'entraînement (15a), au moins sur le côté des surfaces frontales (33, 34).

12. Système de blocage de couple de charge selon la revendication 11,
**caractérisé en ce que**
le prolongement (18a) recouvre, considéré transversalement à l'axe longitudinal du dispositif d'entraînement (15a), une zone angulaire d'au moins 10°.

13. Système de blocage de couple de charge selon l'une quelconque des revendications précédentes,
**caractérisé en ce que**
l'élément enroulé (12) est réalisé sous forme de ressort enroulé, de chaîne à maillons enroulée, de bande enroulée ou de câble enroulé.

14. Groupe, en particulier pour des applications dans des véhicules automobiles, en particulier moteur, machine, entraînement de réglage, entraînement de toit coulissant, entraînement de lève vitre, entraînement d'essuie-glace, actionneur de transmission et/ou d'embrayage, direction électrique de véhicule automobile, comprenant un système de blocage de couple de charge (1) selon l'une quelconque des revendications précédentes.
